# EUROPEAN PATENT APPLICATION

(11) **EP 0 973 111 A2**
(43) Date of publication of application: **19.01.2000**
(21) Application number: 99305340.4
(22) Date of filing: 06.07.1999
(51) Int. Cl.: G06F 17/60

(54) **System and method of applying promotional messages to electronic price labels**

(30) Priority: 15.07.1998 US 115982
(71) Applicant: NCR International, Inc., Dayton, Ohio 45479 (US)
(72) Inventor: Goodwin, John Coker, III, Suwanee, Georgia 30024 (US)
(74) Representative: Cleary, Fidelma

(57) **Abstract**

A system and method of applying promotional messages to electronic price labels (22) uses a price look-up file reader (48) to obtain a promotional index from a price look-up file (54) and uses the promotional index to identify a promotional message in a promotional message definition file (52). A computer (24) maintains a first data file (50) containing item identifiers for items associated with the electronic price labels, obtains promotional indices for the items from the price look-up file (54), which also contains prices of the items, compares the promotional indices to promotional indices stored within the promotional message file (52) to obtain promotional messages from the latter, and transmits to the electronic price labels (22) messages containing the promotional messages and a command to display the promotional messages.

## Description

The present invention relates to electronic price label (EPL) systems and, more specifically, to a system and method of applying messages to EPLs.

Point-of-sale (POS) transaction processing systems typically include a price look-up (PLU) file which contains item identification information and item price information.

EPL systems typically include a plurality of EPLs for merchandise items in a store. EPLs typically display the price of corresponding merchandise items on store shelves and are typically attached to a rail along the leading edge of the shelves. A store may contain thousands of EPLs to display the prices of the merchandise items. The EPLs are coupled to a central server from where information about the EPLs is typically maintained in an EPL data file. Price information displayed by the EPLs is obtained from the PLU data file and stored within an EPL price change record.

During special promotions, EPL systems cannot display the correct price, particular in the case of promotions such as "buy one, get one free" (BOGO). For example, if the cost of an item is one dollar during a BOGO promotion, the manager of the transaction establishment cannot display a price of fifty cents to imply that each of two purchased items is fifty cents, nor can the manager display a price of one dollar to imply that two purchased items may be purchased for one dollar.

Thus, a promotional message which is printed on a paper shelf talker or bib and which explains the promotion must be placed adjacent the EPL for the item. However, paper shelf talkers must be installed manually, thereby increasing the cost and setup time associated with special promotions.

Therefore, it would be desirable to provide a method of applying messages, such as promotional messages, to EPLs. It would also be desirable to provide a method of applying messages to EPLs which uses information in a price look-up (PLU) file and which can be implemented on any given PLU file despite unique formatting of data within the PLU file.

It is accordingly an objet of the present invention to provide a system and method of applying messages to EPLs. Another object is to provide a system and method of applying messages to EPLs which rely on information stored within a price look-up (PLU) file. Yet another object is to provide such a system and method which include a customized PLU file reader.

The system of the invention includes a computer which maintains a first data file containing item identifiers for items associated with the electronic price labels, which obtains promotional indices for the items from a second data file containing prices of the items, which compares the promotional indices to promotional indices stored within a third data file to obtain promotional messages from the third data file, and which transmits to the electronic price labels messages containing the promotional messages and a command to display the promotional messages.

The method of the invention includes the steps of establishing a first data file containing a record for the electronic price label including an identifier for an item associated with the electronic price label by a computer, reading the item identifier from the record in the first data file by the computer, obtaining a corresponding record for the item in a second data file containing a price for the item and a promotional index for the item by the computer, comparing the promotional index to promotional indices stored within a third data file to obtain a promotional message associated with the promotional index for the item by the computer, and transmitting to the electronic price label a message containing the promotional message and a command to display the promotional message by the computer.

In order that the present invention may be more readily understood, a preferred embodiment will now be described with reference to the accompanying drawings, in which:
Fig. 1 is a block diagram of the transaction processing system;
Fig. 2 is a diagram showing data files used within a transaction establishment;
Fig. 3 is a perspective view of an EPL which is displaying a promotional message;
Fig. 4 is a block diagram of a system for producing a PLU file reader program;
Fig. 5 is a flow diagram illustrating how the PLU file reader is created;
Fig. 6 is a flow diagram illustrating the operation of the PLU file reader program; and
Fig. 7 is a flow diagram illustrating the operation of promotional index manager software.

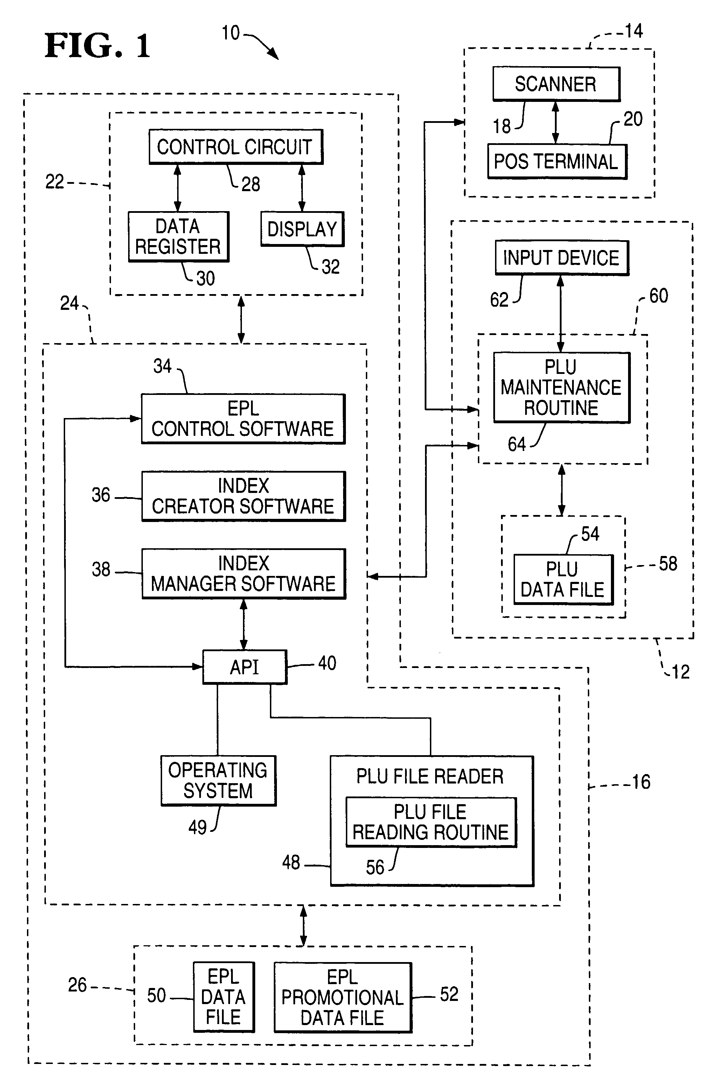

Referring to Fig. 1 of the accompanying drawings, transaction system 10 primarily includes host computer system 12, point-of-sale (POS) system 14 and EPL system 16. Herein, components 12, 14 and 16 are shown as separate components that are networked together, but they may also be combined in various ways, including as a single component. Thus, host computer system 12 may be a POS terminal which doubles as a host computer for network of other POS terminals.

POS system 14 includes bar code reader 18 and terminal 20.

EPL system 16 primarily includes EPLs 22, host EPL terminal 24 and EPL storage medium 26.

EPLs 22 include control circuit 28, data register 30 and display 32. Data register 30 contains data, usually price data, sent from EPL control software 34. The data is typically displayed by display 32. Control circuit 28 controls operation of EPL 22.

Host EPL terminal 24 executes EPL control software 34, promotional index creator software 36, promotional index manager software 38, application programming interface (API) 40, PLU file reader 48 and operating system 49.

To assist with execution of certain tasks performed by EPL control software 34, EPL terminal 24 includes a built-in time keeping device, commonly referred to as a system clock, which is synchronized with current time in order automatically to execute the tasks at their scheduled times.

EPL control software 34 is responsible for scheduling and transmitting data, including price, promotional and other data, from EPL data file 50 to EPLs 22. EPL control software 34 obtains prices in PLU data file 54 as they are entered in input device 62 (immediate processing) or after they have been stored within PLU data file 54. EPL control software 34 also schedules and transmits promotional messages to EPLs 22 when dictated by promotional index manager software 38.

Promotional index creator software 36 creates and manages promotional message definition file 52. Promotional index creator software 36 includes an interface for adding, deleting and changing promotional message entries in promotional message definition file 52. Advantageously, promotional message definition file is designed as a separate file from PLU data file 54 and EPL data file 50 in order to facilitate use in other EPL systems. Towards this end, use of a separate file also facilitates translation of its message contents into different languages by index creator software 36. The file can be translated and copied (duplicated) to all target installations.

Promotional index manager software 38 automatically reads EPL data file 50 to obtain a list of item identification numbers of items associated with EPLs 22. Promotional index manager software 38 then automatically reads PLU data file 54 to obtain promotional indices in the records of the items. For those items whose records contain promotional indices, promotional index manager software 38 obtains promotional messages from promotional message definition file 52 and causes EPL control software 34 to schedule and transmit the promotional messages to the associated EPLs for display.

PLU file reader 48 includes PLU file reading routine 56 which passes back prices to EPL control software 34 through a first API call and passes back indices to promotional index manager software 38 through a second API call. Separate PLU file readers may also be employed.

EPL storage medium 26 stores EPL data file 50 and promotional message definition file 52 and is preferably a fixed disk drive. EPL data file 50 contains EPL identification and price verification information. Promotional message definition file 52 contains a table of promotional messages and their indices.

Host computer system 12 includes PLU storage medium 58, host PLU terminal 60 and input device 62.

PLU storage medium 58 stores PLU data file 54. PLU data file 54 is available for distribution to POS terminal 20. Alternatively, provision may be made for direct access to PLU data file 54 by bar code reader 18.

Host PLU terminal 60 executes PLU maintenance routine 64. PLU maintenance routine 64 updates prices and item identification numbers within PLU data file 54 upon operator input. PLU maintenance routine 64 also allows an operator to add promotional indices to item records within PLU data file 54.

Input device 62 is preferably a keyboard.

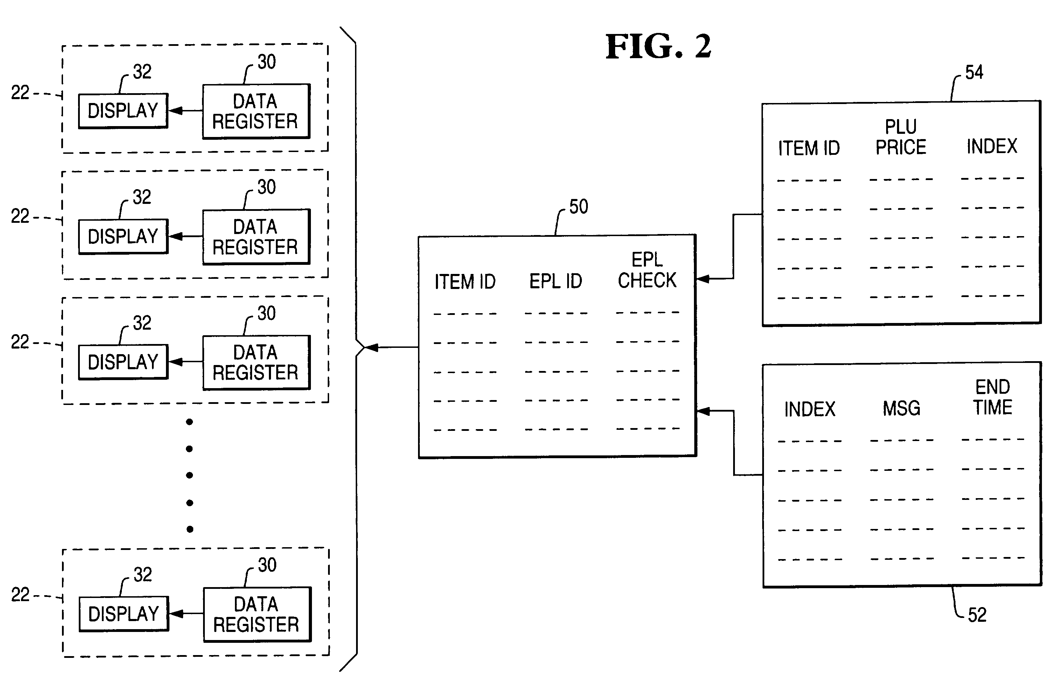

Turning now to Fig. 2, EPL data file 50, promotional message definition file 52 and PLU data file 54 are shown in more detail.

EPL data file 50 includes a line entry for each EPL 22 in EPL system 16. Each line entry has an item identification entry (ITEM ID), an EPL identification entry (EPL ID) and an EPL price checksum value entry (EPL CHECK).

Entry ITEM ID identifies a store item. Entry EPL ID identifies which EPL is assigned to the item. Entry EPL CHECK is a checksum value of the digits of the price information that is displayed by display 32.

PLU data file 54 includes a line entry for each item sold in the store. Each line entry has an item identification entry (ITEM ID) and a PLU price entry (PLU PRICE). Some line entries may also include a promotion message promotional index (INDEX).

Entry ITEM ID identifies a store item. Entry PLU PRICE identifies the price read by POS system 14 to determine the price of each item during scanning by bar code reader 18. Entry INDEX identifies a promotional message in promotional message definition file 52 to be displayed by an EPL associated with the item.

Promotional message definition file 52 includes a line entry for each promotion message promotional index (INDEX) and a corresponding promotional message (MSG). Each line entry may also include an expiration time for the promotional message (END TIME).

During normal operation, EPL control software 34 obtains price information from PLU data file 54 and sends it to data register 30. Display 32 displays the price in data register 30.

Promotional index manager software 38 automatically reads EPL data file 50 to obtain a list of item identification numbers of items associated with EPLs 22. Promotional index manager software 38 then automatically reads PLU data file 54 to obtain any promotional indices in the records of the items. For those items whose records contain promotional indices, promotional index manager software 38 obtains promotional messages from promotional message definition file 52 and causes EPL control software 34 to schedule and transmit the promotional messages and any expiration information to the associated EPLs for display.

EPL control software 34 and promotional index manager software 38 both use PLU file reader 48 to read the contents of PLU data file 54 for price and index information.

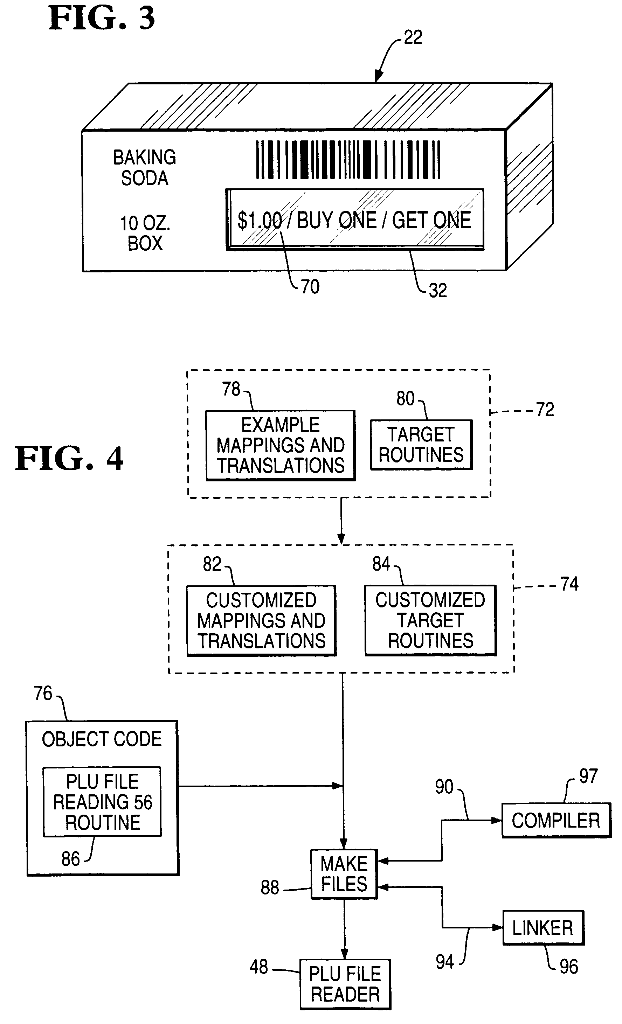

Turning now to Fig. 3, EPL 22 is shown in more detail. The promotional message 70 is shown as "$1.00/BUY ONE/ GET ONE".

Turning now to Fig. 4, the components that are used to construct PLU file reader 48 include template PLU file reader 72, object code 76 and make files 88. Template PLU file reader 72 is a super set of example mappings and translations 78 and example target routines 80. Example mappings and translations 78 and example target routines 80 are edited and customized by developers to produce customized mappings and translations 82 and customized target routines 84 (customized template PLU reader 74). PLU maintenance routine 64 is an example of a customized target routine. Customized mappings and translations 82 and customized target routines 84 along with object code 76 are fed into make files 88 in order to produce executable code for a PLU file reader 48.

Object code 76 consists of libraries 86 that provide an interface into API 40 and isolate all other EPL applications from API 40, thus allowing the existence of PLU file reader 48. Included in libraries 86 are functions to perform module start up, open PLU data file 54, connect an application, such as promotional index manager software 38, to PLU data file 54, close an application's connection to PLU data file 54, close PLU data file 54 and to terminate the application.

Example mappings and translations 78 provide non-displayable information (in code and/or in documentation) and may be edited to customize PLU file reader 48.

Example target routines 80 are routines that may be edited and customized to suit the needs of the target transaction establishment.

Make files 88 are files that pass source code (edited template 90) through compiler 97 and then pass object code 94 through linker 96 to produce the target executable.

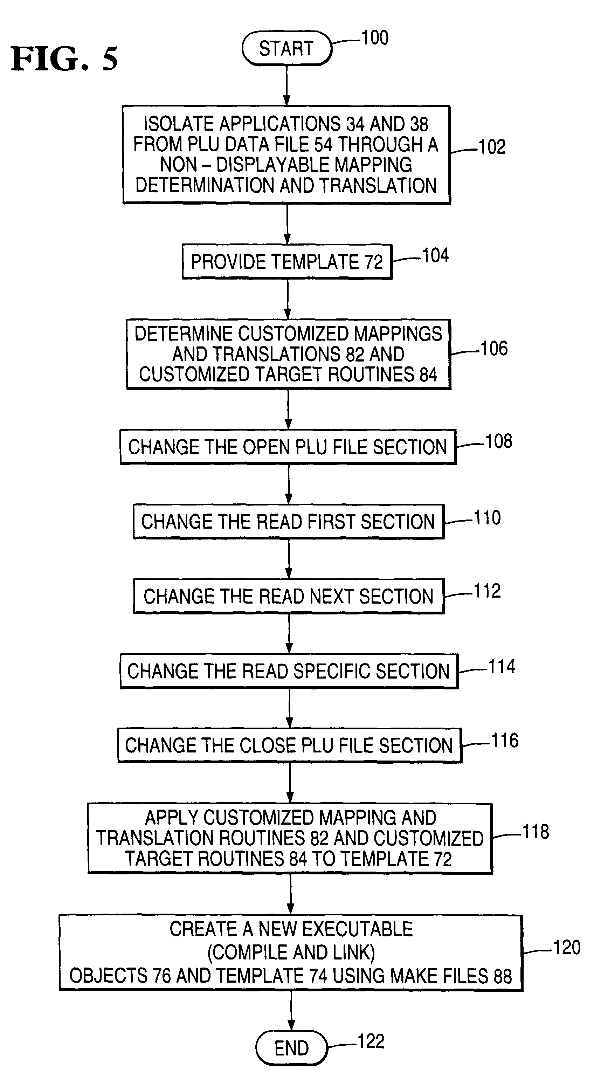

Turning now to Fig. 5, the method of creating PLU file reader 48 begins with START 100.

In step 102, EPL control software 34 and promotional index manager software 38 are isolated from PLU data file 54 through a non-displayable mapping determination and translation process. Example mappings and translations 78 result.

This original development effort is provided to customers for future customization. The person editing the code needs to determine what types of special messages exist in the system and how electronically to determine different system conditions. For example, item linking (whether an item is automatically linked to another item) is a system condition which is utilized for bottle deposits, bottle returns, coupons and discounts. If item linking exists for a particular item, then a discount or reward message can be created. Using item linking for an item requires that a unique return index be created.

In step 104, template 72 is provided. Template 72 is packaged in an installable format that can then be distributed and installed on the target system.

In step 106, customized mappings and translations 82 and customized target routines 84 are determined so that all information for an EPL can be displayed. Connection methods that will be employed for the target system are also determined.

In steps 108-120, customized template 74 is produced by changing template 72 to reflect customized mappings and translations 82. This work is performed by developers who are responsible for the integration of EPL system 16 for a target customer. Integration and customization are directed by the customer. This gives the customer the opportunity to gain a competitive advantage by displaying the information required better to serve its customers.

In step 108, the "open PLU file" section is changed. The "open PLU file" section is a routine that must be completed/ customized to open the PLU data file 54. The open PLU file" section must be executed before any of the read sections.

In step 110, the "read first" section is changed. The "read first" section is a routine that must be completed/customized to read the first PLU in PLU data file 54.

In step 112, the "read next" section is changed. The "read next" section is a routine that must be completed/customized to read the next PLU in PLU data file 54 sequentially.

In step 114, the "read specific" section is changed. The "read specific" section is a routine that must be completed/customized to read a specific PLU data file record.

In step 116, the "close PLU file" section is changed. The "close PLU file" section is a routine that must be completed/customized to close the PLU data file 54. The "close PLU file" section must be executed when the calling program no longer wants to read the PLU file 54.

In step 118, customized mapping and translations 82 and customized target routines 84 derived from step 106 are applied to template 72.

In step 120, a new executable (PLU file reader 48) is compiled and linked from object code 76 and template 74 using make files 88, compiler 92, and linker 94.

In step 122, the method ends.

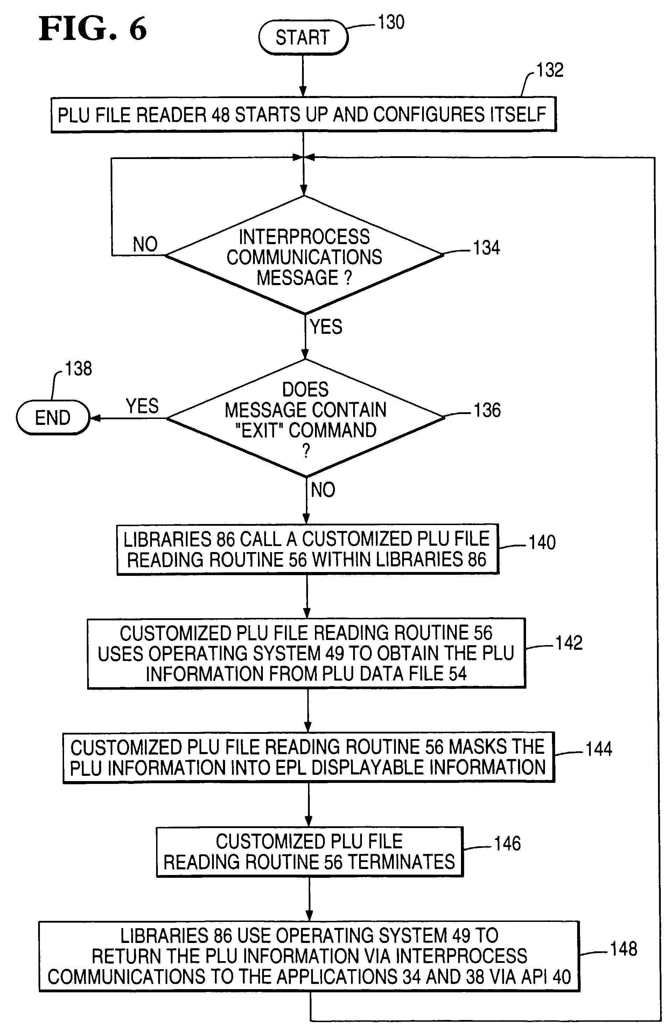

Referring now to Fig. 6, the operation of PLU file reader 48 is illustrated in detail, beginning with START 130.

In step 132, PLU file reader 48 starts up and configures itself.

In step 134, PLU file reader 48 waits for an interprocess communications message from API 40. Interprocess communication services (e.g., "queues" for UNIX, threads or pipes for OS/2) are provided by operating system 49. API 40 calls on operating system 49 to send a request from either EPL control software 34 or promotional index manager software 38 to PLU file reader 48.

For example, EPL control software 34 may request that PLU file reader 48 obtain price information from PLU data file 54 and promotional index manager software 38 may request that PLU file reader 48 obtain promotional indices.

EPL control software 34 and promotional index manager software 38 issue calls to API 40, instructing API 40 to perform a "read direct" routine provided by API 40. API 40 calls on operating system 49 to send the interprocess communications message to PLU file reader 48. Preferably, API 40 passes the message to libraries 86 within PLU file reader 48.

If such a message is received, PLU file reader 48 determines whether the interprocess communications message contains an "exit" command in step 136. If it does, PLU file reader 48 terminates in step 138.

If the interprocess communications message does not contain an "exit" command, libraries 86 call PLU file reading routine 56 within libraries 86 in step 140. PLU file reading routine 56 is customized to EPL control software 34 and promotional index manager software 38.

In step 142, PLU file reading routine 56 uses operating system 49 to obtain the price information and any promotional indicators from PLU data file 54.

In step 144, PLU file reading routine 56 masks the price information and promotional indicators from PLU data file 54.

In step 146, PLU file reading routine 56 ends.

In step 148, libraries 86 call on operating system 49 to return the price information and promotional indices via interprocess communications to EPL control software 34 and promotional index manager software 38 via API 40. PLU file reader 48 returns to a waiting state in step 134.

After PLU file reader 48 sends the price information and promotional indices to API 40, API 40 passes the price information and promotional indices to EPL control software 34 and promotional index manager software 38.

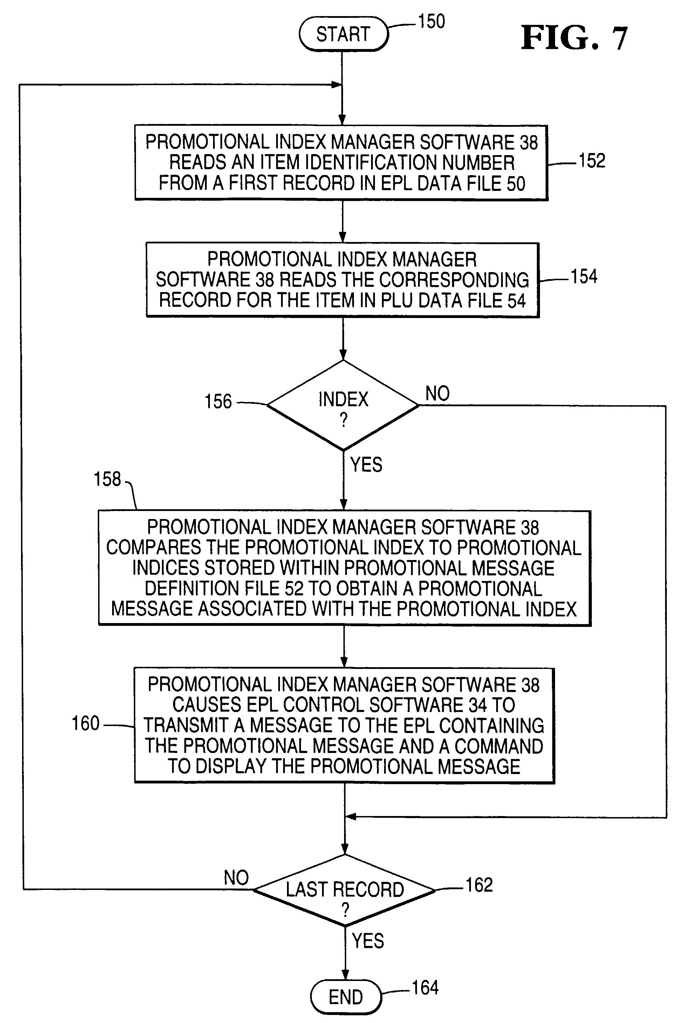

Turning now to Fig. 7, a method of displaying promotional messages by EPLs 22 begins with START 150.

In step 152, promotional index manager software 38 reads an item identification number from a first record in EPL data file 50.

In step 154, promotional index manager software 38 reads the corresponding record for the item in PLU data file 54.

In step 156, promotional index manager software 38 determines whether the record contains a promotional index. If not, operation proceeds directly to step 162. If so, operation proceeds to step 158.

In step 158, promotional index manager software 38 compares the promotional index to promotional indices stored within promotional message definition file 52 to obtain a promotional message associated with the promotional index.

In step 160, promotional index manager software 38 causes EPL control software 34 to transmit a message to the EPL containing the promotional message and a command to display the promotional message.

In step 162, promotional index manager software 38 determines whether the record in EPL data file 50 is the last record. If not, operation returns to step 152. If so, operation ends at step 164.

## Claims

1. A method of applying a promotional message to an electronic price label (22) comprising the steps of:
(a) establishing a first data file (50) containing a record for the electronic price label including an identifier for an item associated with the electronic price label;
(b) reading the item identifier from the record in the first data file;
(c) obtaining a corresponding record for the item in a second data file (54) containing a price for the item and a promotional index for the item;
(d) comparing the promotional index to promotional indices stored within a third data file (52) to obtain a promotional message associated with the promotional index for the item; and
(e) transmitting to the electronic price label (22) a message containing the promotional message and a command to display the promotional message.

2. The method according to claim 1 for applying promotional messages to a plurality of the electronic price labels (22), characterised in that the first data file (50) contains a plurality of records, each including an electronic price label identifier and an item identifier for an item associated with an electronic price label, the item identifiers are read from the records in the first data file, and the corresponding records for the items comprising prices for the items and, selectively, promotional indices for the items are obtained from the second data file (54), further characterised by the steps of
determining whether the records in the second file (54) contain promotional indices and,
for those records in the second file which contain promotional indices, comparing the promotional indices to promotional indices stored within the third data file (52) to obtain promotional messages associated with the promotional indices, and transmitting to the electronic price labels (22) messages containing the promotional messages and a command to display the promotional messages.

3. The method according to claim 2,
characterised by the further steps of placing calls to an application programming interface (40),
reading the second file (54) in response to the calls, and returning the promotional indices to the application programming interface.

4. A system (10) for applying promotional messages to electronic price labels (22), characterised by a computer (24) which maintains a first data file (50) containing item identifiers for items associated with the electronic price labels, which obtains promotional indices for the items from a second data file (54) containing prices of the items, which compares the promotional indices to promotional indices stored within a third data file (52) to obtain promotional messages from the third data file, and which transmits messages to the electronic price labels (22) containing the promotional messages and a command to display the promotional messages.
